# EUROPEAN PATENT SPECIFICATION

(11) **EP 1 361 689 B1**
(45) Date of publication and mention of the grant of the patent: **12.09.2007**
(21) Application number: 03010504.3
(22) Date of filing: 09.05.2003
(51) Int. Cl.: H04L 1/18

(54) **Stopping Hybrid ARQ Data Retransmission in a High Speed Downlink Packet Access (HSDPA) system**
Anhalten der wiederholten Ubertragung von Hybrid ARQ-Daten in einem High Speed Downlink Packet Access (HSDPA) System
Terminaison de retransmissions ARQ hybride de données dans un système High Speed Downlink Packet Access (HSDPA)

(30) Priority: 10.05.2002 KR 2002025967
(43) Date of publication of application: 12.11.2003
(73) Proprietor: SAMSUNG ELECTRONICS CO., LTD., Suwon-City, Kyungki-do (KR)
(72) Inventor: Choi, Sung Ho, Samsung Electronics Co., Ltd., Suwon-city, Kyungki-do (KR); Kim, Wuk, Samsung Electronics Co., Ltd., Suwon-city, Kyungki-do (KR); Park, Joon-Goo, Samsung Electronics Co., Ltd., Suwon-city, Kyungki-do (KR); Im, Young-Ju, Samsung Electronics Co., Ltd., Suwon-city, Kyungki-do (KR)
(74) Representative: Grünecker, Kinkeldey, Stockmair & Schwanhäusser Anwaltssozietät

(56) References cited:
- EP-A- 1 107 511
- EP-A- 1 161 036
- US-A- 6 021 124
- SHINSUKE HARA ET AL: "THROUGHPUT PERFORMANCE OF SAW-ARQ PROTOCOL WITH ADAPTIVE PACKET LENGTH IN MOBILE PACKET DATA TRANSMISSION" IEEE TRANSACTIONS ON VEHICULAR TECHNOLOGY, IEEE INC. NEW YORK, US, vol. 45, no. 3, 1 August 1996 (1996-08-01), pages 561-569, XP000632299 ISSN: 0018-9545
- TECHNICAL SPECIFICATION GROUP RADIO ACCESS NETWORK: "3GGP TR25.848 V4.0.0 Physical layer aspects of UTRA High Speed Downlink Packet Access (Release 4)" 3GPP TR 25.848 V4.0.0, XX, XX, 4 May 2001 (2001-05-04), pages 1-82, XP002189517
- ETSI: "Universal Mobile Telecommunications System (UMTS);UTRA High Speed Downlink Packet Access (HSPDA); Overall Description;Stage 2; 3GPP TS 25.308 version 5.2.0 Release 5" EUROPEAN TELECOMMUNICATIONS STANDARDS INSTITUTE ETSI TECHNICAL SPECIFICATION, [Online] March 2002 (2002-03), pages 1-31, XP002254104 Retrieved from the Internet: <URL:www.etsi.org> [retrieved on 2003-09-10]

## Description

The present invention relates generally to a mobile communication system employing a high speed downlink packet access scheme, and in particular, to an apparatus and method for retransmitting defective packet data.

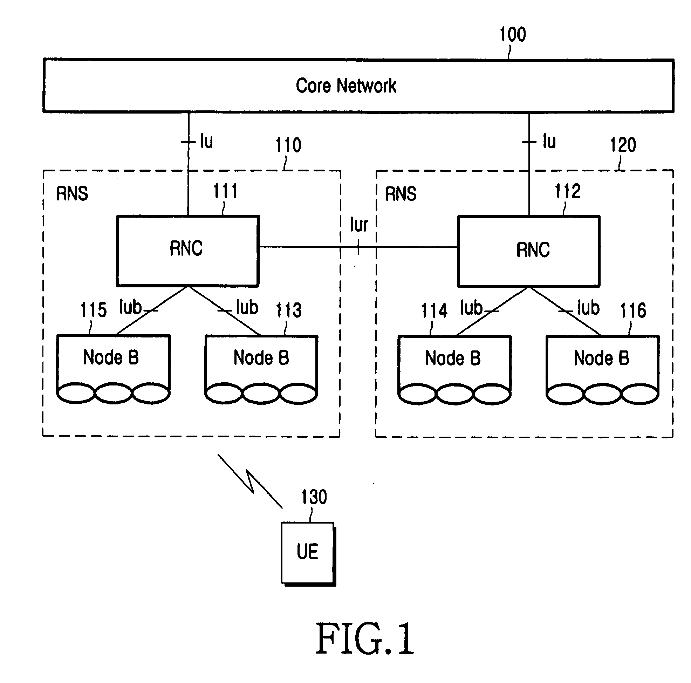

FIG. 1 schematically illustrates a structure of a conventional mobile communication system. The mobile communication system illustrated in FIG. 1, a UMTS (Universal Mobile Telecommunications System) mobile communication system, includes a core network (hereinafter referred to as "CN") 100, a plurality of radio network subsystems (hereinafter referred to as "RNS") 110 and 120, and a user equipment (hereinafter referred to as "UE") 130. The RNSs 110 and 120 each include a radio network controller (hereinafter referred to as "RNC") and a plurality of Node Bs. For example, the RNS 110 includes an RNC 111 and Node Bs 113 and 115, and the RNS 120 includes an RNC 112 and Node Bs 114 and 116. The RNCs are classified into a serving RNC (hereinafter referred to as "SRNC"), a drift RNC (hereinafter referred to as "DRNC") and a controlling RNC (hereinafter referred to as "CRNC") according to their operation. The SRNC refers to an RNC that manages information on UEs and controls data communication with the CN 100. When data from a UE is transmitted via another RNC, i.e., not the SRNC, the RNC is called a DRNC. The CRNC refers to an RNC that controls Node Bs. In FIG. 1, if information on the UE 130 is managed by the RNC 111, the RNC 111 serves as an SRNC for the UE 130. If information on the UE 130 is transmitted and received via the RNC 112 due to movement of the UE 130, the RNC 112 becomes a DRNC for the UE 130 and the RNC 111 that controls the Node B 113 in communication with the UE 130 becomes a CRNC of the Node B 113.

With reference to FIG. 1, a schematic structure of the UMTS mobile communication system has been described. Next, a description will be made of a mobile communication system employing a high speed downlink packet access (hereinafter referred to as "HSDPA") technology.

In general, HSDPA refers to a data transmission technology using a high speed-downlink shared channel (hereinafter referred to as "HS-DSCH"), which is a downlink data channel for supporting high speed downlink packet data transmission, and its associated control channels. Adaptive modulation and coding (hereinafter referred to as "AMC") and hybrid automatic retransmission request (hereinafter referred to as "HARQ") have been proposed to support HSDPA. Typically, in a mobile communication system employing HSDPA (hereinafter referred to as "HSDPA mobile communication system" for convenience), the maximum number of orthogonal variable spreading factor (hereinafter referred to as "OVSF") codes that can be applied to one UE is 15, and one of QPSK (Quadrature Phase Shift Keying), 16QAM (16-ary Quadrature Amplitude Modulation) and 64QAM (64-ary Quadrature Amplitude Modulation) is adaptively selected as a modulation scheme according to a channel condition. For defective data, retransmission is performed between a UE and a Node B, and retransmitted data is soft-combined, thereby improving communication efficiency. A technology for soft-combining retransmitted data for the defective data is called HARQ. A description will be made herein below of n-channel Stop And Wait HARQ (hereinafter referred to as "n-channel SAW HARQ"), a typical example of HARQ.

In conventional automatic retransmission request (hereinafter referred to as "ARQ"), an acknowledgement (hereinafter referred to as "ACK") signal and retransmitted packet data are exchanged between a UE and an RNC. However, HARQ newly applies the following two proposals in order to increase transmission efficiency of ARQ. In a first proposal, a retransmission request and a response are exchanged between a UE and a Node B. In a second proposal, defective data is temporarily stored and then combined with retransmitted data for the corresponding defective data before being transmitted. In HSDPA, an ACK signal and retransmitted packet data are exchanged between a UE and a medium access control (MAC) HS-DSCH of a Node B. In addition, HSDPA has proposed the n-channel SAW HARQ technology in which n logical channels are configured so that packet data can be transmitted even before an ACK signal is received. In the case of SAW ARQ, next packet data cannot be transmitted unless an ACK signal for previous packet data is received.

For this reason, SAW ARQ is disadvantageous in that an ACK signal must be waited for, even though packet data can be currently transmitted. In n-channel SAW HARQ, however, packet data can be continuously transmitted even though an ACK signal for the previous packet data is received. That is, if n logical channels are established between a UE and a Node B and the n logical channels can be identified by time or channel numbers, the UE receiving particular packet data can determine a channel over which the received packet data was transmitted, and take necessary measures of, for example, reconfiguring the received data in a correct order or soft-combining the corresponding packet data.

More specifically, n-channel SAW HARQ has introduced the following two schemes in order to increase efficiency compared with SAW ARQ.

In a first scheme, a reception side temporarily stores defective data and then soft-combines the stored defective data with retransmitted data for the corresponding defective data, thereby decreasing an error rate. Herein, the soft combining is divided into chase combining (hereinafter referred to as "CC") and incremental redundancy (hereinafter referred to as "IR"). In CC, a transmission side uses the same format for initial transmission and retransmission. If m symbols were transmitted over one coded block at initial transmission, the same number 'm' of symbols will be transmitted over one coded block even at retransmission. Herein, the coded block is user data transmitted for one transmission time interval (hereinafter referred to as "TTI"). That is, the same coding rate is applied to initial transmission and retransmission, for data transmission. A reception side then combines an initially transmitted coded block with a retransmitted coded block, and performs a cyclic redundancy check (CRC) operation on the combined coded block to determine whether an error has occurred in the combined coded block.

In IR, however, different formats are used for initial transmission and retransmission. If, for example, n-bit user data is generated into m symbols through channel coding, a transmission side transmits only some of the m symbols at initial transmission, and sequentially transmits the remaining symbols at retransmission. That is, a coding rate for initial transmission is different from a coding rate for retransmission during data transmission. A reception side then configures a coded block with a high coding rate by adding a retransmitted coded block to the remaining part of an initially transmitted coded block, and performs error correction on the configured coded block. In IR, the initial transmission and associated retransmissions thereof are distinguished by redundancy version (hereinafter referred to as "RV"). For example, initial transmission is distinguished by RV1, first retransmission by RV2, and next retransmission by RV3. The reception side can correctly combine an initially transmitted coded block with a retransmitted coded block, using the RV information.

A description will now be made of a second scheme introduced by n-channel SAW HARQ to increase efficiency of SAW ARQ. In SAW ARQ, a next packet cannot be transmitted unless an ACK signal for a previous packet is received. However, in n-channel SAW HARQ, a plurality of packets can be continuously transmitted even before an ACK signal is received, thereby increasing utilization efficiency of a radio link. In n-channel SAW HARQ, if n logical channels are established between a UE and a Node B and are identified by their own unique channel numbers, a UE serving as a reception side can determine a channel to which a received packet belongs, and take necessary measures of, for example, reconfiguring packets in a correct reception order or soft-combining the corresponding packet.

The n-channel SAW HARQ technology will be described in detail with reference to FIG. 1. It will be assumed that 4-channel SAW HARQ is applied between a particular UE 130 and a particular Node B 115, and respective channels are assigned unique logical identifiers of #1 to #4. Each physical layer of the UE 130 and the Node B 115 includes HARQ processors corresponding to respective channels. The Node B 115 assigns a channel identifier #1 to a coded block initially transmitted to the UE 130. If an error has occurred in the corresponding coded block, the UE 130 delivers the coded block to an HARQ processor #1 corresponding to a channel #1 based on the channel identifier #1, and then transmits a negative acknowledgement (hereinafter referred to as "NACK") signal for the channel #1 to the Node B 115. Then, the Node B 115 can transmit a next coded block over a channel #2 regardless of whether an ACK signal for the coded block of the channel #1 is received or not. If an error has occurred even in the next coded block, the UE 130 also delivers the defective coded block to its corresponding HARQ processor.

Upon receiving a NACK signal for the coded block of the channel #1 from the UE 130, the Node B 115 retransmits the corresponding coded block over the channel #1 and the UE 130 delivers the coded block to the HARQ processor #1 based on a channel identifier of the coded block. The HARQ processor #1 soft-combines a previously stored coded block with a retransmitted coded block. As stated above, the n-channel SAW HARQ technology matches channel identifiers to HARQ processors on a one-to-one. Consequently, it is possible to properly match an initially transmitted coded block to a retransmitted coded block without delaying transmission of user data until an ACK signal is received.

In the HSDPA mobile communication system, during retransmission of packet data, a UE sends a retransmission request for defective packet data to a Node B. In this case, the UE waits for a time previously set for the retransmission from the retransmission request point by driving a T1 timer. If a retransmitted part of the retransmission-requested packet data arrives from the Node B within the set time, the UE resets the T1 timer. Otherwise, if a retransmitted part of the retransmission-requested packet data fails to arrive from the Node B within the set time, the UE resets the T1 timer and then discards all data stored in a reordering buffer. However, the Node B, because it has no information on the set time of the T1 timer, performs retransmission on the retransmission-requested packet data even after a lapse of the set time. In this case, the retransmitted part, though it is normally received at the UE, will be discarded, causing unnecessary retransmission of packet data and wasting transmission resources of the system.

US-A-6021124 describes a stop-and-wait ARQ method in which a source stops and waits until a transmitted data packet is acknowledged. For each data packet, a positive acknowledgment must be received from a destination, before a subsequent data packet can be transmitted from the source. If a negative acknowledgment is received from the destination, the source retransmits the same data packet again. If no acknowledgment is received, the source will automatically retransmit the same data packet after a "timeout period". In a communication network that uses a multi-channel ARQ for communicating data packets from a source to a destination over a communication link that is subdivided into a number of channels, a stop-and-wait ARQ method is applied on each one of the channels.

EP-A-1107511 relates to non-disruptive shutdown in a communication network. When a particular network node decides to stop routing protocol messages, the node stops sending or responding to "keep-alive" messages and starts a timer, which runs for a predetermined "timeout period". The predetermined timeout period is selected so that the other network nodes are able to detect that the network node has stopped sending or responding to "keep-alive" messages and begin routing protocol message around the shutdown network node. Once the timer expires, the shutdown network node can safely stop routing protocol messages.

It is the object of the present invention to provide improved packet data retransmission apparatus and method for preventing unnecessary retransmission of packet data in a mobile communication system.

The object is solved by the subject-matter of the independent claims. Preferred embodiments of the present invention are defined in the dependent claims.

According to an aspect of the invention, there is provided an apparatus for retransmitting data using hybrid automatic retransmission request (HARQ) in a mobile communication system. In the apparatus, a radio network controller (RNC) determines maximum waiting time for retransmission of the data, and transmits the determined a maximum waiting time to a Node B and a user equipment (UE). The Node B (a) receives the maximum waiting time and transmitting the data to the UE; (b) upon detecting a retransmission request for the data from the UE, retransmits the data, and at the same time, sets the maximum waiting time; and (c) upon detecting a second retransmission request for the data due to abnormal receipt of the retransmitted data from the UE after a lapse of the maximum waiting time, prevents retransmission of the data. The UE (a) receives the maximum waiting time; (b) if an error exists in data received from the Node B, transmits a retransmission request for the data to the Node B, and at the same time, sets the maximum waiting time; and (c) waits for the retransmitted data only for the maximum waiting time.

According to another aspect of the invention, there is provided a method for retransmitting data using hybrid automatic retransmission request (HARQ) in a mobile communication system. The method comprises determining, by a radio network controller (RNC), a maximum waiting time for retransmission of data, and transmitting the determined maximum waiting time to a Node B and a user equipment (UE); receiving, by the Node B, the maximum waiting time, and transmitting the received maximum waiting time to the UE; receiving, by the UE, the maximum waiting time, receiving data transmitted from the Node B, and if an error exists in the received data, transmitting a retransmission request for the data to the Node B and at the same time, setting the maximum waiting time; upon detecting a retransmission request for the data from the UE, retransmitting, by the Node B, the data to the UE, and at the same time, setting the maximum waiting time; receiving, by the UE, the data retransmitted from the Node B within the maximum waiting time, and transmitting a second retransmission request for the data to the Node B if an error exists in the received data; and upon detecting the second retransmission request for the data from the UE after a lapse of the maximum waiting time, preventing, by the Node B, retransmission of the data.

The above and other aspects, features, and advantages of the present invention will become more apparent from the following detailed description when taken in conjunction with the accompanying drawings in which:
FIG. 1 schematically illustrates a structure of a conventional mobile communication system;
FIG. 2 schematically illustrates a method of retransmitting packet data in an HSDPA mobile communication system;
FIG. 3 illustrates a structure of a MAC-hs layer controller for a Node B according to an embodiment of the present invention;
FIG. 4 is a signal flow diagram schematically illustrating a procedure for retransmitting packet data according to an embodiment of the present invention;
FIG. 5 is a flowchart illustrating an HARQ operation by a Node B according to an embodiment of the present invention; and
FIG. 6 is a flowchart illustrating an HARQ operation by a Node B according to a second embodiment of the present invention.

### DETAILED DESCRIPTION OF THE PREFERRED EMBODIMENT

Several preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

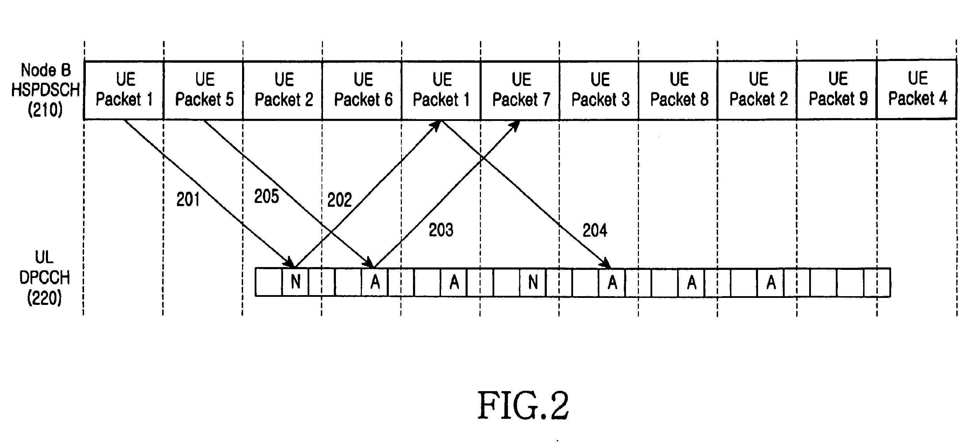

FIG. 2 schematically illustrates a method of retransmitting packet data in an HSDPA mobile communication system. Referring to FIG. 2, a Node B 210 first transmits packet data to a UE 220 over a high speed physical downlink shared channel (hereinafter referred to as "HS-PDSCH"). It is assumed in FIG. 2 that the Node B 210 transmits first to ninth packet data to the UE 220. As illustrated in FIG. 2, the Node B 210 transmits packet data to the UE 220 over HS-PDSCH, and the UE 220 transmits an ACK signal or a NACK signal for the packet data received from the Node B 210, to the Node B 210 over an uplink dedicated physical control channel (hereinafter referred to as "DPCCH"). The Node B 210 assigns unique transmission sequence numbers (hereinafter referred to as "TSN") to the first to ninth packet data, and the UE 220 identifies received packet data by detecting TSN of the received packet data. For example, the first to fourth packet data represents packet data that is handled using HARQ over a first channel, and the fifth to ninth packet data represents packet data that is handled using HARQ over a second channel. Specifically, the first to fourth packet data represents packet data handled in the same buffer, and the fifth to ninth packet data represents packet data handled in different buffers. The Node B 210 sequentially transmits the packet data to the UE 220 from the first packet data. The UE 220 then performs CRC check on the packet data received from the Node B 210 to determine whether the packet data was normally received. If the packet data was normally received, the UE 220 transmits an ACK signal indicating normal receipt of the corresponding packet data, to the Node B 210. However, if the packet data was abnormally received, the UE 220 transmits a NACK signal indicating abnormal receipt of the corresponding packet data, to the Node B 210. That is, as illustrated in FIG. 2, if the Node B 210 transmits the first packet data to the UE 220 (See 201), the UE 220 receives the first packet data and performs CRC check on the received first packet data. If the first packet data was abnormally received, the UE 220 transmits a NACK signal to the Node B 210 (See 202). Upon receiving the NACK signal from the UE 220, the Node B 210 retransmits the first packet data to the UE 220 (See 204). Although the UE 220 does not provide information on an abnormally received packet, the Node B 210 can determine the abnormally received packet among transmitted packets based on a reception point of a NACK signal. Therefore, as described in conjunction with the step 204, the Node B 210 can retransmit the first packet data. On the contrary, when the Node B 210 transmitted the fifth packet data to the UE 220 (See 205), since the fifth packet data was normally received, the UE 220 transmits an ACK signal to the Node B 210 (See 203).

If the packet data received from the Node B 210 is defective, the UE 220 transmits a NACK signal to the Node B 210 through CRC check by a physical layer. The UE 220 does not drive a timer included therein before a medium access control-high speed (hereinafter referred to as "MAC-hs") layer of the UE 220 receives the next packet data of the abnormally received packet data. Specifically, the UE 220 fails to identify an abnormal receipt of the first packet data before the MAC-hs layer identifies that the first packet data was abnormally received and the second packet data was normally received from the Node B 210, both the first packet data and the second packet data being stored in the same buffer. Upon detecting abnormal receipt of the first packet data, the UE 220 drives a timer included therein and waits for retransmission of the abnormally received packet data for a previously set waiting time. After driving the timer, the UE 220 buffers normally received packet data in a reordering buffer, and waits for retransmission of abnormally received packet data.

As described above, the UE 220 assigns packets received from the same reordering buffer to the same reordering buffer, and packets received from different reordering buffer to different reordering buffers. Herein, the UE 220 separately assigns a T1 timer to the reordering buffers whenever assigning the reordering buffers, arid after expiration of a waiting time previously set in the TI timer, the UE 220 delivers packet data buffered in the reordering buffer to an upper layer. For example, when packet data corresponding to TSN#2 is received before packet data with TSN#1 is received, the UE 220 buffers the packet data with TSN#2 by assigning a reordering buffer, and at the same time, assigns a T1 timer to the reordering buffer and drives the T1 timer. If the packet data with TSN#1 is not received until a waiting time set in the T1 timer expires, the UE 220 delivers the packet data with TSN#2 and all of its succeeding packet data to an upper layer. After all packet data buffered in the reordering buffer is delivered to the upper layer, the T1 timer is reset. In contrast, if a retransmitted part of the packet data with TSN#1 is received before the set waiting time of the T1 timer expires, the UE 220 delivers the retransmitted packet data with TSN#1, the packet data with TSN#2 and all of its succeeding packet data to the upper layer, and resets the T1 timer. In this manner, if there is abnormally received packet data, the buffering and waiting operations are continuously repeated.

Alternatively, if packet data with TSN#4 among the packet data received after the packet data with TSN#1 is abnormally received during the set waiting time of the T1 timer, the UE 220 continuously operates the T1 timer previously assigned to the packet data with TSN#1. If the packet data with TSN#1 arrives within the set waiting time, the UE 220 resets the T1 timer to wait for the packet data with PSN#4 and waits for the set waiting time. However, if the packet data with TSN#1 fails to arrive within the set waiting time while operating the T1 timer previously assigned to the packet data with TSN#1, the UE 220 delivers the packet data with TSN#2 and TSN#3 arrived until then, to the upper layer, and drives again a T1 timer for the packet data with TSN#4. A T1 value representing a waiting time of the T1 timer can be provided to the UE 220 from the Node B 210. However, when the Node B 210 fails to determine the T1 value, although the UE 220 has completed all processing on the corresponding packet data, i.e., the packet data with TSN#1, the Node B 210, as stated above, may continuously transmit the packet data with TSN#1 to the UE 220. However, even though the packet data with TSN#1 arriving at the UE 220 after a maximum of the T1 value was normally received, the normally received packet data with TSN#1 is useless to the UE 220. Therefore, the UE 220 discards the packet data with TSN#1. That is, retransmitting the packet data with TSN#1 by the Node B 210 after expiration of the T1 value becomes meaningless and disadvantageous.

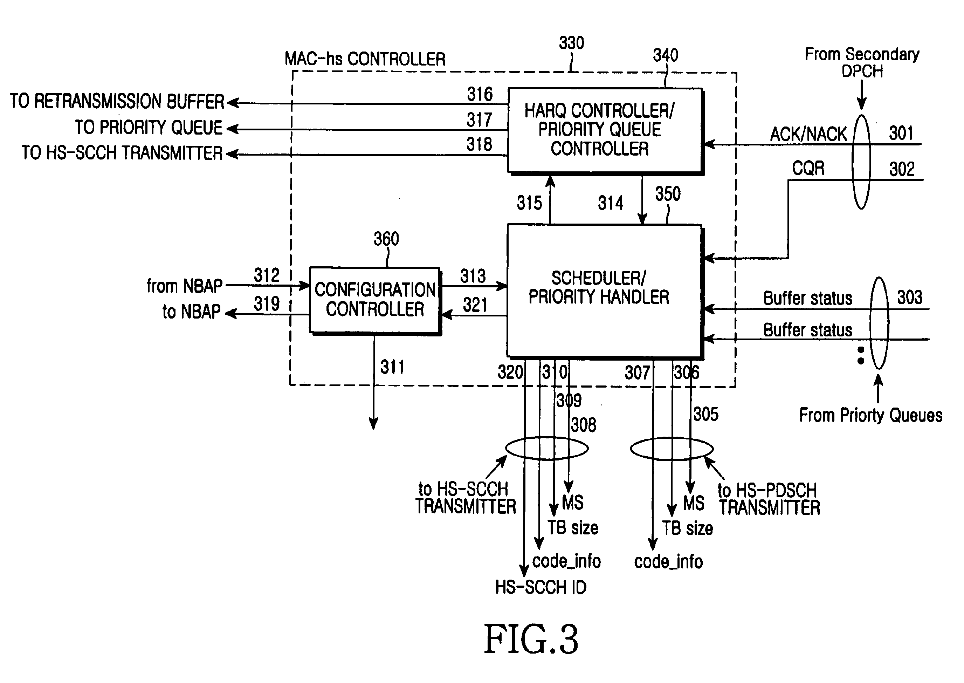

FIG. 3 illustrates a structure of a MAC-hs layer controller for a Node B according to an embodiment of the present invention. Referring to FIG. 3, a MAC-hs layer controller 330 includes an HARQ controller/priority queue controller (hereinafter referred to as "HPC") 340, a scheduler/priority handler (hereinafter referred to as "SPH") 350, and a configuration controller (hereinafter referred to as "CC") 360. The HPC 340 and the SPH 350 include a Node B's T1 timer (not shown) having a set waiting time value T1 of a UE's T1 timer, for which a UE waits for retransmission when an error has occurred in particular packet data.

Upon receiving an ACK/NACK signal for a particular channel signal transmitted by the Node B over a secondary dedicated physical channel (hereinafter referred to as "secondary DPCH") transmitted by the UE, the HPC 340 orders deletion of coded blocks buffered in an HARQ retransmission buffer (not shown). That is, upon receiving an ACK signal for a particular channel x, the HPC 340 orders deletion of all coded blocks buffered in the HARQ retransmission buffer assigned to the channel x (See 316). On the contrary, upon receiving a NACK signal for the channel x, the HPC 340 informs the SPH 350 of the necessity of retransmission of the packet data transmitted over the channel x (See 314). Due to the necessity of retransmission of the packet data transmitted over the channel x, the HPC 340 starts driving a T1 timer having a set waiting time value T1 for which the UE waits when an error has occurred in the packet data transmitted over the channel x. Herein, the T1 timer is increased by the transmission time interval (hereinafter referred to as "TTI") from 0 to a set waiting time value T1 which is the maximum waiting time value. Of course, the T1 timer can also be increased by the unit time.

Further, upon receiving from the SPH 350 an order to retransmit defective packet data, or defective user data, at a time point where transmission of other packet data is not affected (See 315), the HPC 340 delivers an order to retransmit the corresponding packet data to the HARQ retransmission buffer or a priority queue (See 316 and 317). At the same time, the HPC 340 delivers, to a high speed shared control channel (hereinafter referred to as "HS-SCCH") transmitter (not shown), HARQ channel number information, redundancy version (hereinafter referred to as "RV") information and new data indicator (hereinafter referred to as "NDI") information, which determine how the retransmitted packet data is handled (See 318). The RV information represents retransmission number of retransmitted packet data. For example, initial transmission is represented by RV1, first retransmission by RV2, and second retransmission by RV3. A reception side can correctly combine an initially transmitted coded block with a retransmitted coded block, using the RV information. The NDI information indicates whether the currently transmitted packet data is new packet data or retransmitted packet data. For example, if the NDI information is 0, it indicates that the currently transmitted packet data is new packet data. If the NDI information is 1, it indicates that the currently transmitted packet data is retransmitted packet data.

The SPH 350 determines a priority queue that will transmit packet data over HS-PDSCH for the next TTI, by receiving a channel quality report (hereinafter referred to as "CQR") transmitted over the secondary DPCH (See 302), receiving buffer status information from the priority queues (See 303), and receiving from the HPC 340 information indicting whether corresponding packet data is retransmitted packet data. In addition, the SPH 350 determines control information, such as modulation scheme (hereinafter referred to as "MS") information, HS-PDSCH channelization code information (hereinafter referred to as "code_info"), and transport block size (hereinafter referred to as "TBS") information indicating an amount of packet data to be transmitted over the HS-PDSCH, all of which are applied to transmission of the HS-PDSCH. The determined MS information, TBS information, code_info, and an HS-SCCH's logical identifier (hereinafter referred to as "HS-SCCH ID") indicating an HS-SCCH over which the MS information, TBS information, and code_info will be transmitted, are delivered to the HS-SCCH transmitter (See 308, 309, 310, and 320). The HS-SCCH transmitter then transmits the MS information, TBS information, and code_info over an HS-SCCH corresponding to the HS-SCCH ID so that a corresponding UE receives the control information. In addition, the SPH 350 delivers an identifier of a priority queue or an HARQ retransmission buffer scheduled to transmit packet data, and TBS information to the HPC 340 (See 315). The TBS information can be expressed by a 6-bit TBS index, a detailed description of which will be omitted herein for simplicity.

The CC 360 configures a MAC-hs layer and a physical layer by receiving configuration information from a Node B application part (hereinafter referred to as "NBAP") layer (See 312). The "configuration information" refers to information necessary for establishment of HARQ process, assignment of an HARQ retransmission buffer, and configuration of a priority queue, and control information necessary for transmission of the HS-SCCH. The CC 360 delivers an identifier (HS-SCCH ID) of an HS-SCCH over which the HS-SCCH transmission-related information and the control information will be transmitted, to the NBAP layer and the HS-SCCH transmitter (See 319 and 311). In addition, the CC 360 delivers a UE identifier (UE ID) in the configuration information received from the NBAP layer to the HS-SCCH transmitter (See 311), and delivers information on the number of orthogonal variable spreading factor (hereinafter referred to as "OVSF") codes for an HS-PDSCH that the UE can receive, included in the configuration information, to the SPH 350 (See 313).

In particular, the present invention controls scheduling for retransmission of packet data by setting a new timer in the Node B in association with a T1 timer of the UE side so that the timer can be driven according to whether particular packet data received from the UE was normally received, thereby contributing to efficient transmission of packet data. The timer realized in the Node B also waits for the same set waiting time as the set waiting time value T1 for which the T1 timer waits. Therefore, if the set waiting time value T1 has elapsed after the new T1 timer is driven for particular retransmitted packet data, the SPH 350 and the HPC 340 suspend retransmission on the particular retransmitted packet data, thereby preventing unnecessary retransmission of packet data. Herein, among the T1 counters designed to wait for the set waiting time value T1, a T1 counter included in a UE will be referred to as a "UE's T1 counter" and a T1 counter included in a Node B will be referred to as a "Node B's T1 counter," for simplicity.

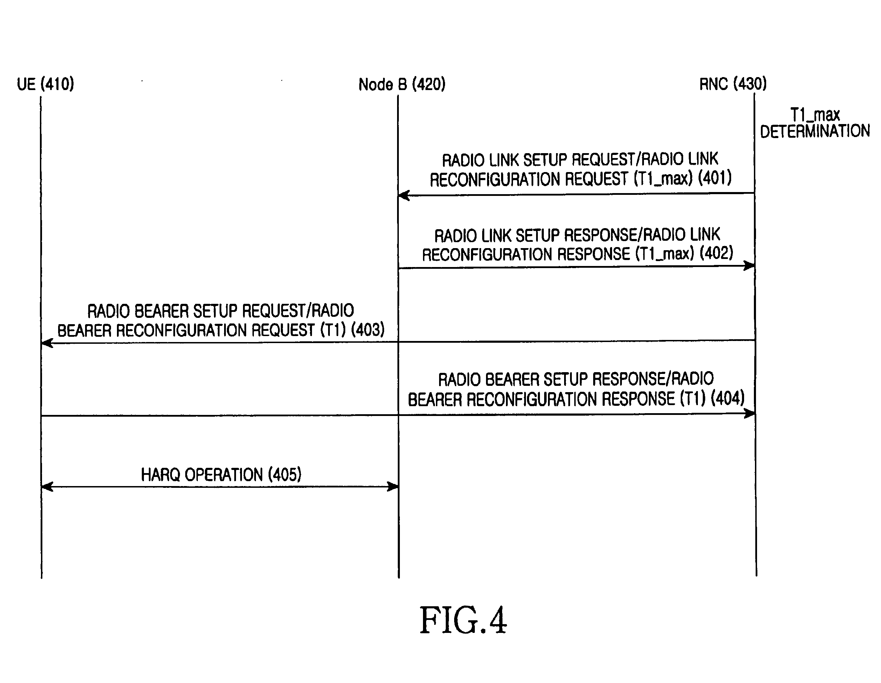

FIG. 4 is a signal flow diagram schematically illustrating a procedure for retransmitting packet data according to an embodiment of the present invention. Referring to FIG. 4, a radio network controller (hereinafter referred to as "RNC") 430 transmits, to a Node B 420, a maximum waiting time value T1_max for which a Node B's T1 counter waits for retransmission of packet data, along with an NBAP message such as a Radio Link Setup Request message or a Radio Link Reconfiguration Request message (Step 401). The Radio Link Setup Request message or the Radio Link Reconfiguration Request message includes code_info information and scrambling code information to be applied to a radio link, e.g., HS-PDSCH, for transmitting packet data. If there is one reordering buffer generated in a UE 410, the RNC 430 transmits only the maximum waiting time value T1_max assigned to the one reordering buffer to the Node B 420. However, if there are more than one reordering buffers generated in the UE 410, the RNC 430 must transmit all of the maximum waiting time values T1_max assigned to the reordering buffers to the Node B 420. That is, the maximum waiting time values T1_max are separately transmitted for the reordering buffers, and the maximum waiting time values T1_max are determined by the RNC 430 and then transmitted to the Node B 420.

A description will now be made of a procedure for determining by the RNC 420 the maximum waiting time values T1_max according to reordering buffers.

The RNC 430 determines the maximum waiting time value T1_max of a T1 timer according to reordering buffers based on the type of packet data buffered in each of the reordering buffers. That is, if the type of the packet data buffered in the reordering buffer represents packet data that requires high speed transmission, the RNC 430 determines the maximum waiting time value T1_max to have a relatively small value. However, if the type of the packet data buffered in the reordering buffer represents packet data that requires accurate transmission rather than high speed transmission, the RNC 430 determines the maximum waiting time value T1_max to have a relatively large value. For example, when a packet data type #1 represents interactive data and a packet data type #2 represents background data, the RNC 430 sets a maximum waiting time value T1_max for a reordering buffer in which the interactive data is buffered, to be higher than a maximum waiting time value T1_max for a reordering buffer in which the background data is buffered. Herein, an UMTS traffic class is classified into four classes of a conversational class, a streaming class, an interactive class, and a background class. The conversational class is assigned to real-time massive high-speed data such as moving image, and the streaming class is assigned to, for example, VOD (Video On Demand) data. The interactive class is assigned to, for example, web service data, and the background class is the lowest class and has the lowest priority among UMTS classes. That is, a UE desiring to receive an interactive data service needs to acquire more instant information as compared with a background data service.

Although the invention has been described above with reference to a case where the RNC 430 determines the maximum waiting time value T1_max according to the type of transmission packet data, the RNC 430 can also determine the maximum waiting time value T1_max according to priority of the packet data as well as the type of the priority data. For example, if packet data buffered in the reordering buffer has relatively high priority, the RNC 430 determines the maximum waiting time value T1_max to have a relatively small value. On the contrary, if packet data buffered in the reordering buffer has relatively low priority, the RNC 430 determines the maximum waiting time value T1_max to have a relatively high value. The reason that as the priority is lower, the maximum waiting time value T1_max is increased higher is because if the maximum waiting time value T1_max for the packet data with low priority has a relatively small value, transmission of the packet data with low priority will be retarded by transmission of other packet data with high priority, causing a possible delay of a retransmission point. In this case, because a retransmitted part for defective packet data arrives after a waiting time of a T1 timer rather than within the waiting time, a UE discards the retransmitted part arrived after the waiting time. However, when priority of retransmission is readjusted to relatively high priority regardless of priority of initial transmission, the maximum waiting time value T1_max is determined regardless of priority of initial transmission. In addition, the maximum waiting time value T1_max must be set to a value smaller than a maximum delay time value T0 allowed for each UMTS traffic class. The term "maximum delay time value T0" refers to a value previously determined for each UMTS traffic class, and is a maximum waiting time value for which data transmission delay can be waited in a particular traffic class. Therefore, the maximum waiting time value T1_max must be determined to be smaller than the maximum delay time value T0 in order to maintain proper service quality of each traffic class. For example, if packet data buffered in a reordering buffer is data corresponding to the streaming class, the RNC 430 determines the maximum waiting time value T1_max to have a value smaller than the maximum delay time value T0 set for the streaming class.

The maximum waiting time value T1_max is included in HS-DSCH FDD (Frequency Division Duplex) information out of the information transmitted through a Radio Link Setup Request message or a Radio Link Reconfiguration Request message, and the HS-DSCH FDD information format is illustrated in Table 1.

**TABLE 1**

| IE/Group Name | Presence | Range | IE type and reference | Semantics description | Criticality | Assigned Criticality |
|---|---|---|---|---|---|---|
| HS-DSCH MAC-d Flow Specific information | | 1.. <Maxno *ofMACdFI ows>* | | | - | |
| >HS-DSCH MAC-d Flow ID | M | | 9.2.1.31l | | - | |
| >BLER | M | | 9.2.1.4A | | - | |
| >Allocation/Retention Priority | M | | 9.2.1.1A | | - | |
| >Priority Queue information | M | 1..*<Maxno ofPrioQue ues>* | | | *-* | |
| >>Priority Queue ID | M | | 9.2.1.49C | | - | |
| >>Scheduling Priority Indicator | M | | 9.2.1.53H | | - | |
| >>T1_max | M | | integer(1... 100....) | TTI. Timer when PDUs are released to the upper layers even though there are outstanding POUs with lower TSN values. | - | |
| >>MAC-d PDU Size Index | | 1.. <Maxno *ofMACdP DUindexes* > | | | - | |
| >>>SID | M | | 9.2.1.53l | | - | |
| >>>MAC-d PDU Size | M | | 9.2.1.38A | | - | |
| UE Capabilities information | | 1 | | | - | |
| >Max TrCH Bits per HS- DSCH TTI | M | | ENUMERA TED (7300. 14600. 20456. 28800....) | | - | |
| >HS-DSCH multi-code capability | M | | ENUMERA TED (5. 10, 15,...) | | - | |
| >Min Inter-TTI Interval | M | | INTEGER (1.. 3,...) | | - | |
| >MAC-hs reordering buffer size | M | | INTEGER (1..300....) | Total combined receiving buffer capability in RLC and MAC-hs in kBytes | - | |
| HARQ memory partitioning | | *1..<Maxno ofHARQpr* ocesses> | | | - | |
| >Process memory size | M | | INTEGER (1..172800, ...) | | - | |
| Measurement feedback offset | M | | INTEGER (0..79,...) | | - | |

As illustrated in Table 1, the maximum waiting time value T1_max is additionally included in the existing HS-DSCH FDD information.

The HS-DSCH FDD information includes 3 kinds of information for managing a dedicated channel in an HS-DSCH MAC layer. The 3 kinds of information include: (1) HS-DSCH MAC-d (MAC-dedicated) Flow Specific Information, (2) UE Capabilities information, and (3) HARQ memory partitioning information. The maximum waiting time value T1_max is included in Priority Queue Information in HS-DSCH MAC-d Flow Specific Information. Range bound information of the HS-DSCH FDD information is illustrated in Table 2.

**TABLE 2**

| **Range bound** | **Explanation** |
|---|---|
| *MaxnoofMACdFlows* | Maximum number of HS-DSCH MAC-d flows |
| *MaxnoofPrioQueues* | Maximum number of Priority Queues |
| *MaxnoofHARQprocesses* | Maximum number of HARQ processes for one UE. |
| *MaxnoofMACdPDUindexes* | Maximum number of different MAG-D PDU SIDs |
| *MaxAllowedinterTTI* | Maximum Inter-TTI Interval that should be supported by any UE. |
| *MaxRecordBuffSize* | Maximum MAC-hs re-ordering buffer size. |
| *MaxProcessMemSize* | Maximum HARQ process memory size. |

Upon receiving the Radio Link Setup Request message or Radio Link Reconfiguration Request message, the Node B 420 detects the maximum waiting time value T1_max included in the Radio Link Setup Request message or Radio Link Reconfiguration Request message, sets the maximum waiting time value T1_max according to reordering buffers included therein, and then transmits a Radio Link Setup Response message or a Radio Link Reconfiguration Response message in response to the Radio Link Setup Request message or Radio Link Reconfiguration Request message (Step 402). Thereafter, when performing retransmission in reply to a NACK signal received from a UE, the Node B 420 manages a waiting time of a reordering buffer with the received maximum waiting time value T1_max. That is, the Node B 420 configures a MAC-hs layer and a physical layer, using information included in the Radio Link Setup Request message or a Radio Link Reconfiguration Request message. Namely, the Node B 420 performs establishment of HARQ process, assignment of HARQ retransmission buffer, and configuration of priority queue.

Upon receiving the Radio Link Setup Response message or Radio Link Reconfiguration Response message from the Node B 420, the RNC 430 transmits the determined maximum waiting time value T1_max to the UE 410, using a particular one of radio resource control (hereinafter referred to as "RRC") messages, for example, a Radio Bearer Setup Request message or a Radio Bearer Reconfiguration Request message (Step 403). The maximum waiting time value T1_max is transmitted over a T1_max information field (IE) described in conjunction with Table 1. Upon receiving the RRC message, the UE 410 detects the maximum waiting time value T1_max included in the RRC message, and manages a waiting time of a reordering buffer included therein with the maximum waiting time value T1_max. Thereafter, the UE 410 transmits a Radio Bearer Setup Response message or a Radio Bearer Reconfiguration Response message to the RNC 430 in response to the Radio Bearer Setup Request message or Radio Bearer Reconfiguration Request message (Step 404). When setup or reconfiguration of a radio link and a radio bearer between the Node B 420 and the UE 410 is completed in the above-stated manner, communication between the Node B 420 and the UE 410 is started. Thus, upon receiving a NACK signal for defective packet data from the UE 410, the Node B 420 performs retransmission on the defective packet data through an HARQ operation. Herein, the retransmission is performed only for the maximum waiting time value T1_max, thereby preventing unnecessary retransmission.

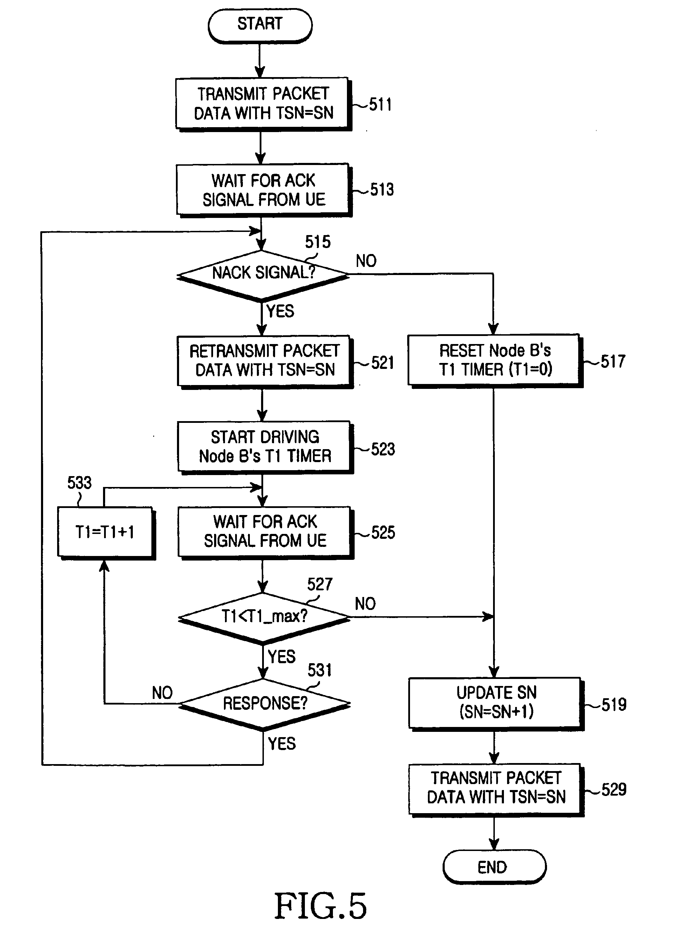

FIG. 5 is a flowchart illustrating an HARQ operation by a Node B according to an embodiment of the present invention. An HARQ operation by the Node B 420 according to the present invention is divided into two methods, and a first method will now be described herein below.

Referring to FIG. 5, a Node B 420 transmits packet data with TSN having a particular serial number (hereinafter referred to as "SN") to a UE 410 in step 511. When user data delivered from an upper layer is transmitted from a radio link control (hereinafter referred to as "RLC") layer to a MAC layer, if an amount of the user data exceeds a protocol data unit (hereinafter referred to as "PDU"), a transmission unit between the RLC layer and the MAC layer, then the RLC layer segments the user data by the PDU. As a result, the user data is segmented into a plurality of PDUs, and sequence of the PDUs is represented by the SN. Therefore, the RLC layer generates RLC-PDU by including a header with a corresponding SN in each of the segmented PDUs. While transmitting packet data with the SN, i.e., RLC-PDU, to the UE 410, the Node B 420 buffers the packet data in the reordering buffer.

In step 513, the Node B 420 waits for a response signal, i.e., ACK signal or NACK signal, for the packet data with the SN from the UE 410. If a response signal is received from the UE 410, the Node B 420 proceeds to step 515. In step 515, the Node B 420 determines whether the response signal for the packet data with the SN, received from the UE 410, is a NACK signal. If the received response signal is an ACK signal rather than a NACK signal, the Node B 420 proceeds to step 517, determining that the packet data with the SN has been normally received at the UE 410. In step 517, the Node B 420 resets the T1 timer, and then proceeds to step 519.

However, if it is determined in step 515 that the response signal received from the UE 410 is a NACK signal, the Node B 420 proceeds to step 521. Since the UE 410 failed to normally receive the packet data with the SN, the Node B 420 retransmits in step 521 the packet data with the SN buffered in the reordering buffer to the UE 410, determining that the packet data with the SN must be retransmitted. In step 523, the Node B 420 starts driving the Node B's T1 timer. Specifically, the Node B 420 starts driving the Node B's T1 timer for retransmission of the packet data by applying the maximum waiting time value T1_max received from an RNC 430. Thereafter, in step 525, the Node B 420 waits again for a response signal for retransmitted packet data with the SN, to be received from the UE 410. In step 527, the Node B 420 determines whether a current waiting time value of the Node B's T1 timer is smaller than the maximum waiting time value T1_max. If the current waiting time value of the Node B's T1 timer is not smaller than the maximum waiting time value T1_max, the Node B 420 proceeds to step 519.

Since the waiting time value of the Node B's T1 timer has already arrived at (or waited for) the maximum waiting time value T1_max, the Node B 420 discards in step 519 the packet data with the SN buffered in the reordering buffer, updates the SN value into a next SN value, i.e., increases the SN value by 1 (SN=SN+1), and then proceeds to step 529. In step 529, the Node B 420 transmits packet data having TSN being identical to the SN increased by 1, to the UE 410, and then ends the procedure. Here, since the new packet data is transmitted, the Node B 420 can include information indicating new packet data in the header, and inform that the packet data with the previous SN value will be no longer transmitted.

However, if it is determined in step 527 that the waiting time value of the Node B's T1 timer is smaller than the maximum waiting time value T1_max, the Node B 420 proceeds to step 531. In step 531, the Node B 420 determines whether the UE 410 makes a response. If the UE 410 makes no response, the Node B 420 proceeds to step 533. In step 533, the Node B 420 increases the waiting time value of the Node B's T1 timer by 1, and then returns to step 525. Otherwise, if the UE 410 makes any response, the Node B 420 returns to step 515, to receive a response signal for the retransmitted packet data from the UE 410 and perform a corresponding operation.

When an ACK signal for the retransmitted packet data or a NACK signal for other packet data is received before expiration of the maximum waiting time value of the Node B's T1 timer, the Node B 420 starts re-driving the Node B's T1 timer.

Next, an HARQ operation by the Node B 420 according to a second method will be described.

The Node B 420 starts driving the T1 timer upon receiving a next ACK signal after receiving a NACK signal. The Node B 420 sequentially assigns TSN in one reordering buffer, and transmits corresponding packet data to the UE 410. When a NACK signal for TSN is received, if a first ACK signal is received for packet data with the next TSN, the Node B 420 starts driving a Node B's T1 timer. The Node B 420 ends driving of (or inactivates) the Node B's T1 timer, when retransmission is performed on all packet data, for which a NACK signal was received, having TSN smaller than that of packet data for which the ACK signal was received before the Node B's T1 timer arrives at the maximum waiting time value T1_max, and then an ACK signal is received for all the packet data. The Node B 420 restarts driving the Node B's T1 timer, when after starting driving the Node B's T1 timer and before the Node B's T1 timer is inactivated, the Node B 420 receives an ACK signal for all packet data, for which a NACK signal was received, having TSN smaller than that of packet data for which the ACK signal was received, and when the Node B 420 waits for an ACK signal for another packet data in the corresponding reordering buffer, for which a NACK signal was received, and there is packet data for which an ACK signal was received after the packet data for which the NACK signal was received.

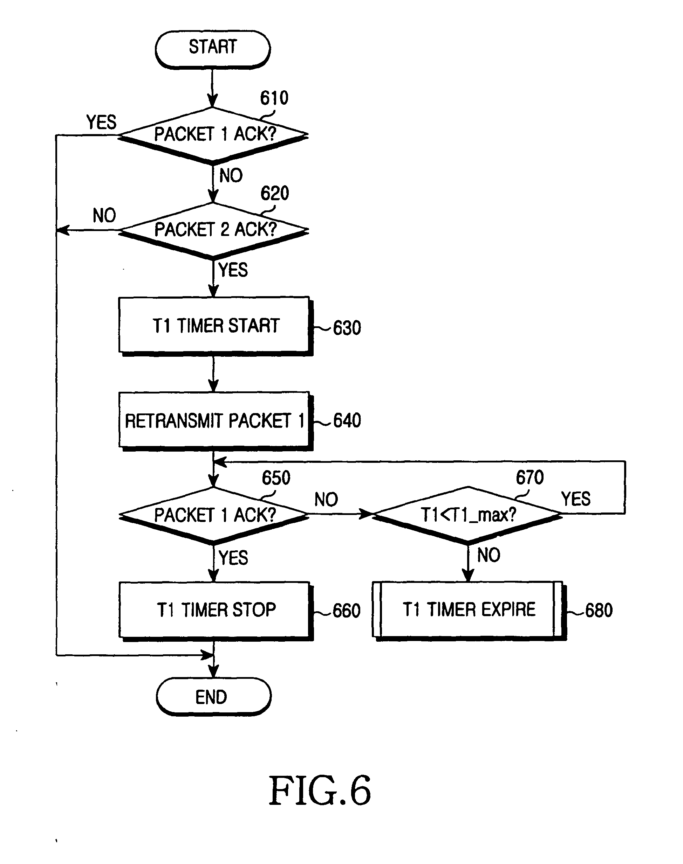

A second embodiment will now be described with reference to FIG. 6. In this embodiment, a description will be made of a method for driving and stopping a T1 timer on the assumption that NACK is received for a first data packet Packet#1 out of two consecutive data packets while ACK is received for a next data packet Packet#2. Referring to FIG. 6, it is determined whether ACK was received for the first data packet Packet#1 (Step 610). If NACK was received for the first data packet Packet#1, it is determined whether ACK was received for the next data packet Packet#2 (Step 620). If NACK was received for the Packet#2, it is determined whether ACK is received for a data packet succeeding the Packet#2, to start a corresponding T1 timer. However, if ACK was received for the Packet#2, the T1 timer is driven (Step 630). Thereafter, if NACK was received for the Packet#1, it means that the Packet#1 was abnormally received. In this case, retransmission of the Packet#1 is requested (Step 640). Subsequently, it is determined whether ACK is received for the retransmission-requested Pacekt#1 (Step 650). If ACK is received for the retransmission-requested Packet#1, the T1 timer is stopped (Step 660). However, if NACK was received for the retransmission-requested Packet#1 in step 650, it is determined whether a value of the T1 timer driven in step 630 exceeds a T1_max value (Step 670). If the value of the T1 timer does not exceed the T1_max value, retransmission of the Packet#1 is requested (Step 640). However, if the value of the T1 timer exceeds the T1_max value, the T1 timer expires (Step 680).

For example, if the Node B 420 has received a NACK signal for a transmitted packet with TSN#1 and an ACK signal for a next transmitted packet with TSN#2, the Node B 420 drives the T1 timer at the point where the ACK signal for the packet with TSN#2 is received. The Node B 420 performs retransmission on the packet with TSN#1 until the T1 timer arrives at the T1_max, and then waits for an ACK signal for the retransmitted packet. If an ACK signal indicating normal receipt of the packet with TSN#1 is received from the UE 410 before the T1 timer arrives at the T1_max, the T1 timer is reset. If a NACK signal is received for a packet with TSN#3 and an ACK signal is received for a packet with TSN#4 before an ACK signal indicating normal receipt of retransmitted packet data for the packet data with TSN#1 is not received during activation of the T1 timer, then the T1 timer is activated for reception of retransmitted packet data for the packet data with TSN#1. If an ACK signal for the packet with TSN#1 is received while the T1 timer is driven up to the T1_max, T1 timer for the packet data with TSN#3 that was abnormally received is then driven. On the contrary, if an ACK signal indicating normal receipt of the packet data with TSN#1 is not received until T1 timer driven for receipt of an ACK signal for the packet data with TSN#1 arrives at the T1_max, the Node B 420 discards the packet data with TSN#1 and then drives T1 timer for performing retransmission until the packet data with TSN#3 is normally received. This prevents unnecessary packet transmission caused by synchronous operation with the UE during retransmission, thereby contributing to efficient retransmission. If the Node B drives the T1 timer upon receiving a NACK signal as described in conjunction with the first embodiment of the present invention, an advantage of its implementation is that it is easy to embody.. Both embodiments can prevent unnecessary packet transmission in a retransmission process. The T1 timer can be controlled by either the HARQ controller 340 or the scheduler 350 illustrated in FIG. 3.

As described in conjunction with the first method, when the Node B's T1 timer has arrived at (or waited for) the maximum waiting time value T1_max or is newly reset, because this indicates transmission of all new packet data, the Node B 420 includes information indicating new data in the header and informs the UE 410 that packet data with the previous SN value will be no longer transmitted.

As described above, in an HSDPA mobile communication system according to the present invention, a Node B and a UE both include their T1 timer for retransmission of packet data and wait for the same waiting time, thereby preventing unnecessary retransmission of packet data. The prevention of unnecessary retransmission of packet data contributes to a reduction in a transmission load and improvement of system performance.

While the invention has been shown and described with reference to a certain preferred embodiment thereof, it will be understood by those skilled in the art that various changes in form and details may be made therein without departing from the scope of the invention as defined by the appended claims.

## Claims

1. A method for retransmitting data using hybrid automatic retransmission request HARQ in a mobile communication system comprising a radio network controller RNC, a Node B and a user equipment UE, the method comprising the steps of:
determining, by the RNC, a maximum waiting time for retransmission of data, and transmitting the determined maximum waiting time to the Node B and the UE;
receiving, by the Node B and the UE, the maximum waiting time;
transmitting, by the Node B, data to the UE;
receiving, by the UE, the data transmitted from the Node B, and if an error exists in the received data, transmitting a retransmission request for the data to the Node B and setting the maximum waiting time;
upon detecting the retransmission request for the data from the UE, retransmitting, by the Node B, the data to the UE, and setting the maximum waiting time;
receiving, by the UE, the data retransmitted from the Node B, and transmitting, if the retransmitted data is received within the maximum waiting time, a second retransmission request for the data to the Node B if an error exists in the received data; and
upon detecting the second retransmission request for the data from the UE after a lapse of the maximum waiting time, preventing, by the Node B, retransmission of the data.

2. The method of claim 1, further comprising the step of discarding, by the Node B, the data after a lapse of the maximum waiting time.

3. The method of claim 1 or 2, further comprising the step of retransmitting, by the Node B, the data upon detecting the second retransmission request within the maximum waiting time.

4. The method of any of claims 1 to 3, wherein the maximum waiting time is transmitted to the Node B along with a radio link setup request message.

5. The method of any of claims 1 to 3, wherein the maximum waiting time is transmitted to the Node B along with a radio link reconfiguration message.

6. The method of any of claims 1 to 5, wherein the maximum waiting time is transmitted to the UE along with a radio bearer setup request message.

7. The method of any of claims 1 to 5, wherein the maximum waiting time is transmitted to the UE along with a radio bearer reconfiguration request message.

8. The method of any of claims 1 to 7, wherein the maximum waiting time is determined according to a type of the data.

9. The method of any of claims 1 to 7, wherein the maximum waiting time is determined according to a priority of the data.

10. A method for retransmitting data by a Node B using hybrid automatic retransmission request HARQ in a mobile communication system comprising a radio network controller RNC, the node B and a user equipment UE, when a user equipment UE failed to correctly receive data transmitted from the Node B, the method comprising the steps of:
upon detecting a retransmission request for the data from the UE, retransmitting the data and setting a maximum waiting time received from the RNC; and
upon detecting a second retransmission request for the data from the UE after a lapse of the maximum waiting time, preventing retransmission of the data.

11. The method of claim 10, further comprising the step of discarding the data after a lapse of the maximum waiting time.

12. The method of claims 10 or 11, further comprising the step of retransmitting the data upon detecting the second retransmission request within the maximum waiting time.

13. The method of any of claims 10 to 12, wherein the maximum waiting time is received from the RNC along with a radio link setup request message.

14. The method of any of claims 10 to 12, wherein the maximum waiting time is received from the RNC along with a radio link reconfiguration message.

15. A mobile communication system for retransmitting data using hybrid automatic retransmission request HARQ, the system comprising:
a radio network controller (RNC);
a Node B; and
a user equipment (UE);
wherein the RNC comprises
means for determining a maximum waiting time for retransmission of data, and
means for transmitting the determined maximum waiting time to the Node B and the UE;
wherein the Node B comprises
means for receiving the maximum waiting time transmitted from the RNC,
means for transmitting data to the UE,
means for, upon detecting a retransmission request for the data from the UE, retransmitting the data to the UE and setting the maximum waiting time, and
means for, upon detecting a second retransmission request for the data from the UE after a lapse of the maximum waiting time, preventing retransmission of the data; and
wherein the UE comprises
means for receiving the maximum waiting time transmitted from the RNC,
means for receiving the data transmitted from the Node B,
means for, if an error exists in the received data, transmitting a retransmission request for the data to the Node B and setting the maximum waiting time,
means for receiving the data retransmitted from the Node B, and
means for, if the retransmitted data is received within the maximum waiting time, transmitting a second retransmission request for the data to the Node B if an error exists in the received data.

16. The system of claim 15 wherein the Node B further comprises means for discarding the data after a lapse of the maximum waiting time.

17. The system of claim 15 or 16, wherein the Node B further comprises means for retransmitting the data upon detecting the second retransmission request within the maximum waiting time.

18. The system of any of claims 15 to 17, wherein the RNC is adapted to transmit the maximum waiting time to the Node B along with a radio link setup request message.

19. The system of any of claims 15 to 17, wherein the RNC is adapted to transmit the maximum waiting time to the Node B along with a radio link reconfiguration message.

20. The system of any of claims 15 to 19, wherein the RNC is adapted to transmit the maximum waiting time to the UE along with a radio bearer setup request message.

21. The system of any of claims 15 to 19, wherein the RNC is adapted to transmit the maximum waiting time to the UE along with a radio bearer reconfiguration request message.

22. The system of any of claims 15 to 21, wherein the RNC is adapted to determine the maximum waiting time according to a type of the data.

23. The system of any of claims 15 to 21, wherein the RNC is adapted to determine the maximum waiting time according to a priority of the data.

24. An apparatus for retransmitting data by a Node B using hybrid automatic retransmission request HARQ in a mobile communication system comprising a radio network controller (RNC), the node B and a user equipment (UE), when a user equipment (UE) failed to correctly receive data transmitted from the Node B, the apparatus comprising:
means for receiving the maximum waiting time transmitted from the RNC,
means for transmitting data to the UE,
means for, upon detecting a retransmission request for the data from the UE, retransmitting the data to the UE and setting the maximum waiting time, and
means for, upon detecting a second retransmission request for the data from the UE after a lapse of the maximum waiting time, preventing retransmission of the data.

25. The apparatus of claim 24, further comprising means for discarding the data after a lapse of the maximum waiting time.

26. The apparatus of claim 24 or 25, further comprising means for retransmitting the data upon detecting the second retransmission request within the maximum waiting time.

27. The apparatus of any of claims 24 to 26, further comprising means for receiving the maximum waiting time from the RNC along with a radio link setup request message.

28. The apparatus of any of claims 24 to 26, further comprising means for receiving the maximum waiting time from the RNC along with a radio link reconfiguration message.

29. The apparatus of any of claims 24 to 28, wherein the maximum waiting time has a same value as a maximum waiting time for data retransmission set in the UE.

30. The apparatus of any of claims 24 to 29, further comprising a scheduler for determining a transmission point of data and a retransmission point of data.

## Patentansprüche

1. Verfahren zum erneuten Senden von Daten unter Verwendung von HARQ (hybrid automatic retransmission request) in einem Mobilkommunikationssystem, das einen Radio Network Controller RNC, einen Knoten B und ein Teilnehmergerät umfassf, wobei das Verfahren die folgenden Schritte umfasst:
Bestimmen einer maximalen Wartezeit für das erneute Senden von Daten und Senden der bestimmten maximalen Wartezeit zu dem Knoten B und dem Teilnehmergerät durch den RNC;
Empfangen der maximalen Wartezeit durch den Knoten B und das Teilnehmergerät;
Senden von Daten zu dem Teilnehmergerät durch den Knoten B;
Empfangen der von dem Knoten B gesendeten Daten durch das Teilnehmergerät, und wenn ein Fehler in den empfangenen Daten vorliegt, Senden einer Sendewiederholungs-Anforderung für die Daten zu dem Knoten B und Einstellen der maximalen Wartezeit;
nach Erfassen der Sendewiederholungs-Anforderung für die Daten von dem Teilnehmergerät, erneutes Senden der Daten zu dem Teilnehmergerät durch den Knoten B und Einstellen der maximalen Wartezeit;
Empfangen der von dem Knoten B erneut gesendeten Daten durch das Teilnehmergerät und Senden einer zweiten Sendewiederholungs-Anforderung für die Daten zu dem Knoten B, wenn die erneut gesendeten Daten innerhalb der maximalen Wartezeit empfangen werden und ein Fehler in den empfangenen Daten vorliegt; und
nach Erfassen der zweiten Sendewiederholungs-Anforderung für die Daten von dem Teilnehmergerät nach einem Verstreichen der maximalen Wartezeit, Verhindern des erneuten Sendens der Daten durch den Knoten B.

2. Verfahren nach Anspruch 1, das des Weiteren den Schritt des Verwerfens der Daten nach einem Verstreichen der maximalen Wartezeit durch den Knoten B umfasst.

3. Verfahren nach Anspruch 1 oder 2, das des Weiteren den Schritt des erneuten Sendens der Daten durch den Knoten B nach Erfassen der zweiten Sendewiederholungs-Anforderung innerhalb der maximalen Wartezeit umfasst.

4. Verfahren nach einem der Ansprüche 1 bis 3, wobei die maximale Wartezeit zusammen mit einer Funkverbindungs-Einrichtanforderungsnachricht zu dem Knoten B gesendet wird.

5. Verfahren nach einem der Ansprüche 1 bis 3, wobei die maximale Wartezeit zusammen mit einer Funkverbindungs-Rekonfiguriernachricht zu dem Knoten B gesendet wird.

6. Verfahren nach einem der Ansprüche 1 bis 5, wobei die maximale Wartezeit zusammen mit einer Funkträger-Einrichtanforderungsnachricht zu dem Teilnehmergerät gesendet wird.

7. Verfahren nach einem der Ansprüche 1 bis 5, wobei die maximale Wartezeit zusammen mit einer Funkträger-Rekonfigurieranforderungsnachricht zu dem Teilnehmergerät gesendet wird.

8. Verfahren nach einem der Ansprüche 1 bis 7, wobei die maximale Wartezeit gemäß einem Typ der Daten bestimmt wird.

9. Verfahren nach einem der Ansprüche 1 bis 7, wobei die maximale Wartezeit gemäß einer Priorität der Daten bestimmt wird.

10. Verfahren zum erneuten Senden von Daten durch einen Knoten B unter Verwendung von HARQ (hybrid automatic retransmission request) in einem Mobilkommunikationssystem, das einen Radio Network Controller RNC, den Knoten B und ein Teilnehmergerät umfasst, wenn ein Teilnehmergerät von dem Knoten B gesendete Daten nicht korrekt empfangen hat, wobei das Verfahren die folgenden Schritte umfasst:
nach Erfassen einer Sendewiederholungs-Anforderung für die Daten von dem Teilnehmergerät, erneutes Senden der Daten und Einstellen einer von dem RNC empfangenen maximalen Wartezeit; und
nach Erfassen einer zweiten Sendewiederholungs-Anforderung für die Daten von dem Teilnehmergerät nach einem Verstreichen der maximalen Wartezeit, Verhindern des erneuten Sendens der Daten.

11. Verfahren nach Anspruch 10, das des Weiteren den Schritt des Verwerfens der Daten nach einem Verstreichen der maximalen Wartezeit umfasst.

12. Verfahren nach den Ansprüchen 10 oder 11, das des Weiteren den Schritt des erneuten Sendens der Daten nach Erfassen der zweiten Sendewiederholungs-Anforderung innerhalb der maximalen Wartezeit umfasst.

13. Verfahren nach einem der Ansprüche 10 bis 12, wobei die maximale Wartezeit von dem RNC zusammen mit einer Funkverbindungs-Einrichtanforderungsnachricht empfangen wird.

14. Verfahren nach einem der Ansprüche 10 bis 12, wobei die maximale Wartezeit von dem RNC zusammen mit einer Funkverbindungs-Rekonfiguriernachricht empfangen wird.

15. Mobilfunkkommunikationssystem zum erneuten Senden von Daten unter Verwendung von HARQ (hybrid automatic retransmission request), wobei das System umfasst:
einen Radio Network Controller (RNC);
einen Knoten B; und
ein Teilnehmergerät;
wobei der RNC umfasst:
eine Einrichtung zum Bestimmen einer maximalen Wartezeit zum erneuten Senden von Daten, und
eine Einrichtung zum Senden der bestimmten maximalen Wartezeit zu dem Knoten B und dem Teilnehmergerät;
wobei der Knoten B umfasst:
eine Einrichtung zum Empfangen der von dem RNC gesendeten maximalen Wartezeit,
eine Einrichtung zum Senden von Daten zu dem Teilnehmergerät,
eine Einrichtung, die nach Erfassen einer Sendewiederholungs-Anforderung für die Daten von dem Teilnehmergerät die Daten erneut zu dem Teilnehmergerät sendet und die maximale Wartezeit einstellt, und
eine Einrichtung, die nach Erfassen einer zweiten Sendewiederholungs-Anforderung für die Daten von dem Teilnehmergerät nach einem Verstreichen der maximalen Wartezeit ein erneutes Senden der Daten verhindert; und
wobei das Teilnehmergerät umfasst:
eine Einrichtung zum Empfangen der von dem RNC gesendeten maximalen Wartezeit,
eine Einrichtung zum Empfangen der von dem Knoten B gesendeten Daten,
eine Einrichtung, die, wenn ein Fehler in den empfangenen Daten vorliegt, eine Sendewiederholungs-Anforderung für die Daten zu dem Knoten B sendet und die maximale Wartezeit einstellt,
eine Einrichtung zum Empfangen der von dem Knoten B erneut gesendeten Daten, und
eine Einrichtung, die, wenn die erneut gesendeten Daten innerhalb der maximalen Wartezeit empfangen werden, eine zweite Sendewiederholungs-Anforderung für die Daten zu dem Knoten B sendet, wenn ein Fehler in den empfangenen Daten vorliegt.

16. System nach Anspruch 15, wobei der Knoten B des Weiteren eine Einrichtung zum Verwerfen der Daten nach einem Verstreichen der maximalen Wartezeit umfasst.

17. System nach Anspruch 15 oder 16, wobei der Knoten B des Weiteren eine Einrichtung zum erneuten Senden der Daten nach Erfassen der zweiten Sendewiederholungs-Anforderung innerhalb der maximalen Wartezeit umfasst.

18. System nach einem der Ansprüche 15 bis 17, wobei der RNC so eingerichtet ist, dass er die maximale Wartezeit zusammen mit einer Funkverbindungs-Einrichtanforderungsnachricht zu dem Knoten B sendet.

19. System nach einem der Ansprüche 15 bis 17, wobei der RNC so eingerichtet ist, dass er die maximale Wartezeit zusammen mit einer Funkverbindungs-Rekonfiguriernachricht zu dem Knoten B sendet.

20. System nach einem der Ansprüche 15 bis 19, wobei der RNC so eingerichtet ist, dass er die maximale Wartezeit zusammen mit einer Funkträger-Einrichtanforderungsnachricht zu dem Teilnehmergerät sendet.

21. System nach einem der Ansprüche 15 bis 19, wobei der RNC so eingerichtet ist, dass er die maximale Wartezeit zusammen mit einer Funkträger-Rekonfigurieranforderungsnachricht zu dem Teilnehmergerät sendet.

22. System nach einem der Ansprüche 15 bis 21, wobei der RNC so eingerichtet ist, dass er die maximale Wartezeit gemäß einem Typ der Daten bestimmt.

23. System nach einem der Ansprüche 15 bis 21, wobei der RNC so eingerichtet ist, dass er die maximale Wartezeit gemäß einer Priorität der Daten bestimmt.

24. Vorrichtung, die Daten durch einen Knoten B unter Verwendung von HARQ (hybrid automatic retransmission request) in einem Mobilkommunikationssystem, das einen Radio Network Controller (RNC), den Knoten B und ein Teilnehmergerät umfasst, erneut sendet wenn ein Teilnehmergerät von dem Knoten B gesendete Daten nicht korrekt empfangen hat, wobei die Vorrichtung umfasst:
eine Einrichtung zum Empfangen der von dem RNC gesendeten maximalen Wartezeit,
eine Einrichtung zum Senden von Daten zu dem Teilnehmergerät,
eine Einrichtung, die nach Erfassen einer Sendewiederholungs-Anforderung für die Daten von dem Teilnehmergerät die Daten erneut zu dem Teilnehmergerät sendet und die maximale Wartezeit einstellt, und
eine Einrichtung, die nach Erfassen einer zweiten Sendewiederholungs-Anforderung für die Daten von dem UE nach einem Verstreichen der maximalen Wartezeit ein erneutes Senden der Daten verhindert.

25. Vorrichtung nach Anspruch 24, die des Weiteren eine Einrichtung zum Verwerfen der Daten nach einem Verstreichen der maximalen Wartezeit umfasst.

26. Vorrichtung nach Anspruch 24 oder 25, die des Weiteren eine Einrichtung umfasst, die die Daten nach Erfassen der zweiten Sendewiederholungs-Anforderung innerhalb der maximalen Wartezeit erneut sendet.

27. Vorrichtung nach einem der Ansprüche 24 bis 26, die des Weiteren eine Einrichtung zum Empfangen der maximalen Wartezeit von dem RNC zusammen mit einer Funkverbindungs-Einrichtanforderungsnachricht umfasst.

28. Vorrichtung nach einem der Ansprüche 24 bis 26, die des Weiteren eine Einrichtung zum Empfangen der maximalen Wartezeit von dem RNC zusammen mit einer Funkverbindungs-Rekonfigurierungsnachricht umfasst.

29. Vorrichtung nach einem der Ansprüche 24 bis 28, wobei die maximale Wartezeit den gleichen Wert hat wie eine maximale Wartezeit für eine Daten-Sendewiederholung, die in dem Teilnehmergerät eingestellt ist.

30. Vorrichtung nach einem der Ansprüche 24 bis 29, die des Weiteren einen Scheduler zum Bestimmen eines Sendepunktes von Daten und eines Sendewiederholungspunktes von Daten umfasst.

## Revendications

1. Procédé pour retransmettre des données en utilisant une demande de retransmission automatique hybride HARQ (Hybrid Automatic Retransmission Request) dans un système de communication mobile comprenant une unité de commande de réseau radio RNC (Radio Network Controller), un Noeud B et un équipement utilisateur UE (User Equipment), le procédé comprenant les étapes suivantes :
détermination, par l'unité RNC, d'un temps d'attente maximum pour la retransmission de données et la transmission du temps d'attente maximum déterminé au Noeud B et à l'UE ;
réception par le Noeud B et l'UE du temps d'attente maximum ;
transmission par le Noeud B de données à l'UE ;
réception, par l'UE, des données transmises par le Noeud B et si une erreur est présente dans les données reçues, transmission d'une demande de retransmission des données au Noeud B et réglage du temps d'attente maximum ;
lors de la détection de la demande de retransmission des données en provenance de l'UE, retransmission, par le Noeud B, des données à l'UE, et fixation du temps d'attente maximum ;
réception, par l'UE, des données retransmises en provenance du Noeud B, et transmission, si les données retransmises sont reçues avant le temps d'attente maximum, d'une deuxième demande de retransmission des données au Noeud B si une erreur est présente dans les données reçues ; et
lors de la détection de la deuxième demande de retransmission des données en provenance de l'UE après que le temps d'attente maximum s'est écoulé, empêchement, par le Noeud B, de la retransmission des données.

2. Procédé selon la revendication 1, comprenant en outre l'étape de rejet, par le Noeud B, des données après que le temps d'attente maximum s'est écoulé.

3. Procédé selon la revendication 1 ou 2, comprenant en outre l'étape de retransmission, par le Noeud B, des données lors de la détection de la deuxième demande de retransmission avant le temps d'attente maximum.

4. Procédé selon l'une quelconque des revendications 1 à 3, dans lequel le temps d'attente maximum est transmis au Noeud B en association avec un message de demande d'établissement de liaison radio.

5. Procédé selon l'une quelconque des revendications 1 à 3, dans lequel le temps d'attente maximum est transmis au Noeud B en association avec un message de reconfiguration de liaison radio.

6. Procédé selon l'une quelconque des revendications 1 à 5, dans lequel le temps d'attente maximum est transmis à l'UE en association avec un message de demande d'établissement de porteuse radio.

7. Procédé selon l'une quelconque des revendications 1 à 5, dans lequel le temps d'attente maximum est transmis à l'UE en association avec un message de demande de reconfiguration de porteuse radio.

8. Procédé selon l'une quelconque des revendications 1 à 7, dans lequel le temps d'attente maximum est déterminé en fonction d'un type des données.

9. Procédé selon l'une quelconque des revendications 1 à 7, dans lequel le temps d'attente maximum est déterminé en fonction d'une priorité des données.

10. Procédé de retransmission de données par un Noeud B en utilisant une demande de retransmission automatique hybride HARQ dans un système de communication mobile comprenant une unité de commande de réseau radio RNC (Radio Network Controller), le Noeud B et un équipement utilisateur UE lorsqu'un équipement utilisateur UE n'a pas pu correctement recevoir des données transmises en provenance du Noeud B, le procédé comprenant les étapes suivantes :
lors de la détection d'une demande de retransmission des données en provenance de l'UE, retransmission des données et fixation d'un temps d'attente maximum reçu de l'unité RNC ; et
lors de la détection d'une deuxième demande de retransmission des données en provenance de l'UE après qu'un temps d'attente maximum s'est écoulé, empêchement de retransmission des données.

11. Procédé selon la revendication 10, comprenant en outre l'étape de rejet des données après qu'un temps d'attente maximum s'est écoulé.

12. Procédé selon la revendication 10 ou 11, comprenant en outre l'étape de retransmission des données lors de la détection de la deuxième demande de retransmission avant le temps d'attente maximum.

13. Procédé selon l'une quelconque des revendications 10 à 12, dans lequel le temps d'attente maximum est reçu de l'unité RNC en association avec un message de demande d'établissement de liaison radio.

14. Procédé selon l'une quelconque des revendications 10 à 12, dans lequel le temps d'attente maximum est reçu de l'unité RNC en association avec un message de reconfiguration de liaison radio.

15. Système de communication mobile pour retransmettre des données en utilisant une demande de retransmission automatique hybride HARQ, le système comprenant :
une unité de commande radio (RNC) ;
un Noeud B ; et
un équipement utilisateur (UE) ;
dans lequel l'unité RNC comprend :
un moyen pour déterminer un temps d'attente maximum pour la retransmission des données, et
un moyen pour transmettre le temps d'attente maximum déterminé au Noeud B et à l'UE ;
dans lequel le Noeud B comprend :
un moyen pour recevoir le temps d'attente maximum transmis par l'unité RNC,
un moyen pour transmettre des données à l'UE,
un moyen pour, lors de la détection d'une demande de retransmission des données en provenance de l'UE, retransmettre des données à l'UE et fixer le temps d'attente maximum ; et
un moyen pour, lors de la détection d'une deuxième demande de retransmission des données en provenance de l'UE après qu'un temps d'attente maximum s'est écoulé, empêcher la retransmission des données ; et
dans lequel l'UE comprend :
un moyen pour recevoir le temps d'attente maximum transmis en provenance de l'unité RNC,
un moyen pour recevoir les données transmises en provenance du Noeud B,
un moyen pour, si une erreur est présente dans les données reçues, transmettre une demande de retransmission des données au Noeud B et fixer le temps d'attente maximum,
un moyen pour recevoir les données retransmises en provenance du Noeud B, et
un moyen pour, si les données retransmises sont reçues avant le temps d'attente maximum, transmettre une deuxième demande de retransmission des données au Noeud B si une erreur est présente dans les données reçues.

16. Système selon la revendication 15, dans lequel le Noeud B comprend en outre un moyen pour rejeter les données après qu'un temps d'attente maximum s'est écoulé.

17. Système selon la revendication 15 ou 16, dans lequel le Noeud B comprend en outre un moyen pour retransmettre les données lors de la détection de la deuxième demande de retransmission avant le temps d'attente maximum.

18. Système selon l'une quelconque des revendications 15 à 17, dans lequel l'unité RNC est conçue pour transmettre le temps d'attente maximum au Noeud B en association avec un message de demande d'établissement de liaison radio.

19. Système selon l'une quelconque des revendications 15 à 17, dans lequel l'unité RNC est conçue pour transmettre le temps d'attente maximum au Noeud B en association avec un message de reconfiguration de liaison radio.

20. Système selon l'une quelconque des revendications 15 à 19, dans lequel l'unité RNC est conçue pour transmettre le temps d'attente maximum à l'UE en association avec un message de demande d'établissement de porteuse radio.

21. Système selon l'une quelconque des revendications 15 à 19, dans lequel l'unité RNC est conçue pour transmettre le temps d'attente maximum à l'UE en association avec un message de demande de reconfiguration de porteuse radio.

22. Système selon l'une quelconque des revendications 15 à 21, dans lequel l'unité RNC est conçue pour déterminer le temps d'attente maximum en conformité avec le type des données.

23. Système selon l'une quelconque des revendications 15 à 21, dans lequel l'unité RNC est conçue pour déterminer le temps d'attente maximum en conformité avec la priorité des données.

24. Appareil pour la retransmission de données par un Noeud B en utilisant une demande de retransmission automatique hybride HARQ dans un système de communication mobile comprenant une unité de commande de réseau radio (RNC), le Noeud B et un équipement utilisateur (UE), lorsqu'un équipement utilisateur (UE) n'a pas pu correctement recevoir des données transmises en provenance du Noeud B, l'appareil comprenant :
un moyen pour recevoir le temps d'attente maximum transmis par l'unité RNC,
un moyen pour transmettre des données à l'UE,
un moyen pour, lors de la détection d'une demande de retransmission des données en provenance de l'UE, retransmettre les données à l'UE et fixer le temps d'attente maximum, et
un moyen pour, lors de la détection d'une deuxième demande de retransmission des données en provenance de l'UE après que le temps d'attente maximum s'est écoulé, empêcher la retransmission des données.

25. Appareil selon la revendication 24, comprenant en outre un moyen pour rejeter les données après que le temps d'attente maximum s'est écoulé.

26. Appareil selon la revendication 24 ou 25, comprenant en outre un moyen pour retransmettre les données lors de la détection de la deuxième demande de retransmission avant le temps d'attente maximum.

27. Appareil selon l'une quelconque des revendications 24 à 26, comprenant en outre un moyen pour recevoir le temps d'attente maximum de l'unité RNC en association avec un message de demande d'établissement de liaison radio.

28. Appareil selon l'une quelconque des revendications 24 à 26, comprenant en outre un moyen pour recevoir le temps d'attente maximum de l'unité RNC en association avec un message de reconfiguration de liaison radio.

29. Appareil selon l'une quelconque des revendications 24 à 28, dans lequel le temps d'attente maximum a la même valeur que le temps d'attente maximum de retransmission des données fixé dans l'UE.

30. Appareil selon l'une quelconque des revendications 24 à 29, comprenant en outre un programmateur pour déterminer un point de transmission de données et un point de retransmission de données.
